# EUROPEAN PATENT SPECIFICATION

(11) **EP 2 822 142 B1**
(45) Date of publication and mention of the grant of the patent: **06.12.2017**
(21) Application number: 14175244.4
(22) Date of filing: 01.07.2014
(51) Int. Cl.: H02J 7/02, H01M 10/44, B60L 11/18

(54) **Method for wireless charging authentication and related wireless charging system**
Verfahren zur drahtlosen Ladeauthentifizierung und zugehöriges drahtloses Ladesystem
Procédé d'authentification de charge sans fil et système de charge sans fil associé

(30) Priority: 01.07.2013 US 201361841431 P; 31.10.2013 US 201361897833 P; 10.01.2014 US 201461925665 P; 14.04.2014 US 201461979010 P
(43) Date of publication of application: 07.01.2015
(73) Proprietor: HTC Corporation, Taoyuan City 330 (TW)
(72) Inventor: Chu, Feng-Seng, 330 Taoyuan City, Taoyuan County (TW)
(74) Representative: Emde, Eric

(56) References cited:
- DE-A1-102010 042 395
- US-A1- 2005 127 867
- US-A1- 2007 069 687
- US-A1- 2007 103 110
- US-A1- 2009 001 932
- US-A1- 2010 036 773
- US-A1- 2010 066 305
- US-A1- 2012 007 554
- US-A1- 2012 268 238
- US-A1- 2013 127 410

## Description

### Background of the Invention

### 1. Field of the Invention

The present invention relates to a method used in a wireless charging system and related wireless charging system, and more particularly, to a method of wireless charging authentication in a wireless charging system and related wireless charging system.

### 2. Description of the Prior Art

With the proliferation of portable electronic devices such as mobile device (MD), smart phone and tablet PC, the demand for charging devices, especially for those provided in public areas, is increasing. In addition, people would like to get rid of annoying wires if possible. One technology which realizes this desire is wireless charging, in which portable electronic device(s) comprising a power receiver is placed on and charged through a wireless charging device (e.g. a power base station comprising a power transmitter) . Therefore, the current trend aims at providing wireless charging in public areas such as coffee shops, stores, train stations, airports, and restaurants, so that people can easily find a wireless power supply to charge their portable electronic devices .

Wireless Power Consortium (WPC) is a leading organization in the world to define wireless charging specifications. The document "Wireless Power Transfer - Volume I, part I" and the document "Wireless Power Transfer - Volume 2, part I" define the interaction between a power base station (or a power transmitter) and a mobile device (or a power receiver).

However, all the existing protocol states are used for power charging and there is no consideration for other applications. The place which provides wireless charging cannot bill their customer for power charging, since there is no authentication in the protocol.

Therefore, there is a need to implement authentication mechanism for wireless charging in order to meet the business requirement of deploying wireless charging services in public areas.

US 2007/0069687 A1 discloses a charging apparatus for charging a secondary battery incorporated in a portable electronic device. The charging apparatus includes a contactless IC card reader configured to supply operating power to a contactless IC card unit incorporated in the portable electronic device and have an authentication function of authenticating that an object to be authenticated is a correct one, a charging circuit configured to perform contactless charging of the secondary battery, and a control unit configured to activate the charging circuit if an authentication result is OK after the contactless IC card reader authenticates an object to be authenticated when the object to be authenticated is placed.

US 2010/0066305 A1 discloses a contactless charging system, an electronic device, a contactless charger, and a battery pack for an electronic device which are used in the system. A contactless charging system is made up of a mobile phone that is an electronic device and a contactless charger that recharges the mobile phone in a contactless manner. The mobile phone transmits a full charge command indicating completion of charge. Upon receipt of the full charge command, the contactless charger shifts to a charge stop state in which charge of the mobile phone is not performed. In the charge stop state, the contactless charger generates a load check signal for checking whether or not the mobile phone is placed in the contactless charger in a rechargeable state, and transmits the signal. Further, the contactless charger also generates a charge restart check command for checking whether or not the mobile phone requests recharge in a charge stop state, and transmits the command. In the case that load is determined to be present, the control section shifts the contactless charger to an authentication mode. At this time, the control section generates an authentication request command for requesting to perform authentication, and the command is transmitted from the coil through modulation performed by the modulation section. When a digital signal originating from the load in response to the command is demodulated by the demodulation section, the authentication section authenticates and determines the demodulated digital signal, thereby determining whether or not an authentication ID of the mobile phone can be acquired. In the case that the authentication ID is not acquired, namely, some error has arisen in authentication, the control section brings the contactless charger into an error mode. The control section again checks whether or not there is load. In the case that load is determined to be absent, the contactless charger is again brought into a standby mode. When load is determined to be present, an error mode is maintained. In the case that the authentication section authenticates the mobile phone in the authentication mode, the control section shifts the contactless charger to a transfer mode (in course of recharge). When the digital signal from the mobile phone is demodulated by the demodulation section, the authentication section authenticates and determines the demodulated digital signal, thereby determining whether or not the signal is a full charge command indicating completion of recharge of the battery cell of the mobile phone.

US 2013/0127410 A1 discloses an apparatus for adjusting charging power of a wireless power receiver. When one or more wireless power receivers require charging, it is determined whether the sum of required charging powers required by the one or more wireless power receivers exceeds maximum supplied power provided by a wireless power transmitter. When a result indicates that the sum exceeds the maximum supplied power, a control operation is performed to adjust the required charging power of each wireless power receiver. When a packet data signal including identification information and characteristic information of each of the one or more wireless power receivers is received from the one or more wireless power receivers that received a ping signal from a wireless power transmitter, the transmission controller of the wireless power transmitter first identifies the identification information and the characteristic information included in the received packet data signal, and then authenticates the one or more wireless power receivers. Herein, the identification information of the wireless power receiver includes ID (IDentification) information of the wireless power receiver, and the characteristic information includes maximum required power of each of the wireless power receivers. When the ID authentication of the one or more wireless power receivers is not successful, the transmission controller transmits an error signal, namely, an error message, reporting an authentication failure.

### Summary of the Invention

An objective of the present invention is to provide a method and related wireless charging system for wireless charging authentication.

The invention is defined by the independent claims.

Preferred embodiments of the method of the present invention may be gathered from the dependent claims.

The objectives of the present invention will become obvious to those of ordinary skill in the art after reading the following detailed description of the preferred embodiment that is illustrated in the various figures and drawings.

### Brief Description of the Drawings

FIG. 1 is a schematic diagram of a wireless charging system according to an example of the present invention.
FIG. 2 is a functional block diagram of a wireless charging system according to an example of the present invention.
FIG. 3 illustrates a schematic diagram of a wireless charging system in accordance with an example of the present invention.
FIG. 4 is a flowchart of a process according to an example of the present invention.
FIG. 5 shows a signal diagram of a wireless charging authentication procedure where there is a communication channel from the power base station to the mobile device according to an example of the present invention.
FIG. 6 shows a signal diagram of a wireless charging authentication procedure where there is no communication channel from the power base station to the mobile device according to an example of the present invention.
FIG. 7 shows a signal diagram of a wireless charging authentication procedure where there is no communication channel from the power base station to the mobile device according to another example of the present invention.
FIG. 8 shows a signal diagram of a wireless charging authentication procedure according to an example of the present invention.
FIG. 9 shows a signal diagram for the steps executed when the power base station determines that the authentication is failed according to an example of the present invention.
FIG. 10 shows a signal diagram for the steps executed when the power base station determines that the authentication is failed according to an example of the present invention.
FIG. 11 shows a signal diagram for the steps executed when the power base station determines that the authentication is failed according to an example of the present invention.
FIG. 12 shows a signal diagram for the steps executed when the power base station determines that the authentication is failed according to an example of the present invention.
FIG. 13 shows a signal diagram of a wireless charging authentication procedure according an example of the present invention.

### Detailed Description

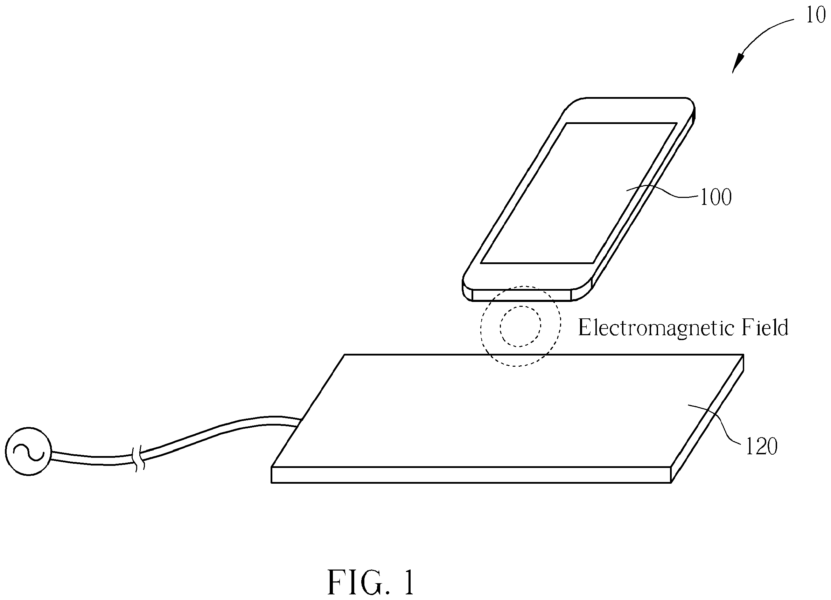

Please refer to FIG. 1, which illustrates a schematic diagram of a wireless charging system 10 according to an example of the present disclosure. A wireless charging system may include at least one wireless charging device and at least one electronic device that can be charged by the wireless charging device. For simplicity, in FIG. 1, the wireless charging system 10 is briefly composed of an electronic device 100 and a wireless charging device 120. The wireless charging device 120 may represent a power base station (PBS), including a power transmitter or a power transmitting module with digital/analog chip(s), to supply wireless power to the electronic device 100. The electronic device 100 may be any portable electronic device such as a mobile device (MD), a mobile phone, a laptop, a tablet computer, an electronic book, a portable computer system, or at least a power receiver or a power receiving module. Alternatively, the electronic device 100 may be any electronic device using battery as its power supply, such as a wearable computing device, a wearable medical device, a portable MP3 player, etc. The electronic device 100 may directly attach to the wireless charging device 120 or keep within a distance from the wireless charging device 120 for wireless charging. As shown in FIG. 1, the electronic device 100 receives wireless power from the wireless charging device 120 by electromagnetic induction so that the battery of the electronic device 100 is charged without using any wire connection.

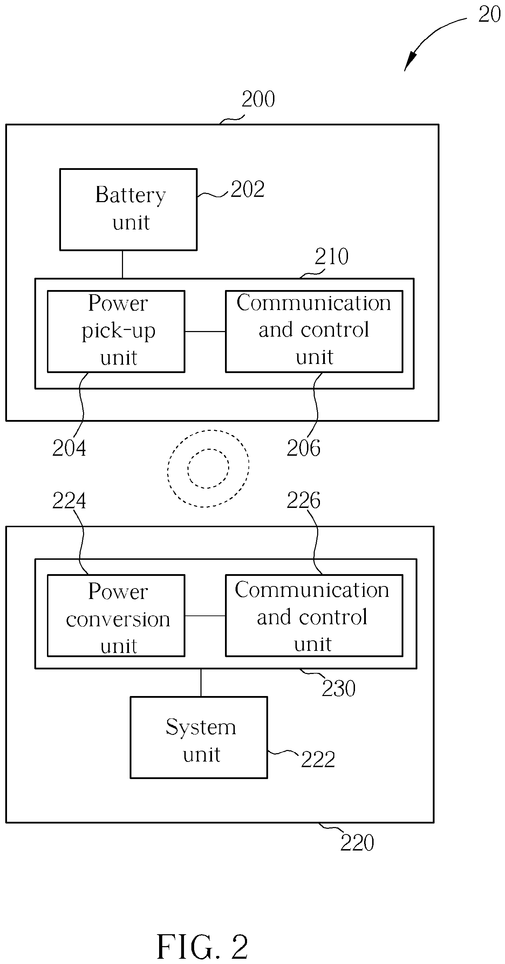

Please refer to FIG. 2, which is a functional block diagram of a wireless charging system 20 according to an example of the present invention. The wireless charging system 20 includes an electronic device 200 and a wireless charging device 220. The electronic device 200 may be the electronic device 100 shown in FIG. 1, and the wireless charging device 220 may be the wireless charging device 120 shown in FIG. 1. The electronic device 200 includes a battery unit 202 and a power receiver 210. The power receiver 210 may include a power pick-up unit 204 used for receiving wireless power to charge the battery unit 202 and a communication and control unit 206 used for communicating, i.e., sending/receiving signals or packets, with the wireless charging device 220 via power signals and controlling the operation of the power pick-up unit 204.

The wireless charging device 220 includes a power transmitter 230 and a system unit 222. The power transmitter 230 may include a power conversion unit 224 used for supplying wireless power and a communication and control unit 226 used for communicating, i.e., sending/receiving signals or packets, with the electronic device 200 and controlling the operation of the power conversion unit 224. The system unit 222 may include a processing means such as a microcontroller, microprocessor or an Application Specific Integrated Circuit (ASIC), for handling wireless charging authentication function activated by a processing result of the power transmitter 230. In the example of FIG. 2, the wireless charging device 220 contains one power transmitter 230. In other examples, the wireless charging device may contain multiple power transmitters for supplying wireless power to multiple portable electronic devices.

The communication and control units 206 and 226 preferably utilize an in-band communication channel for communication, in which communication channels are attached on wireless power signal. In an example, communication from wireless charging device 220 to electronic device 200 may be carried out by using frequency-shift keying (FSK) modulation on the wireless power for transmission. In another example, communication from electronic device 200 to wireless charging device 220 may rely on load modulation (LM). Alternatively, the communication and control units 206 and 226 may be implemented by radio transceivers that transmit and receive radio signals (e.g., messages, emails, or packets) in an out-of-band communication channel (e.g. a short-range communication protocol such as Bluetooth, Bluetooth LE, Wi-Fi).

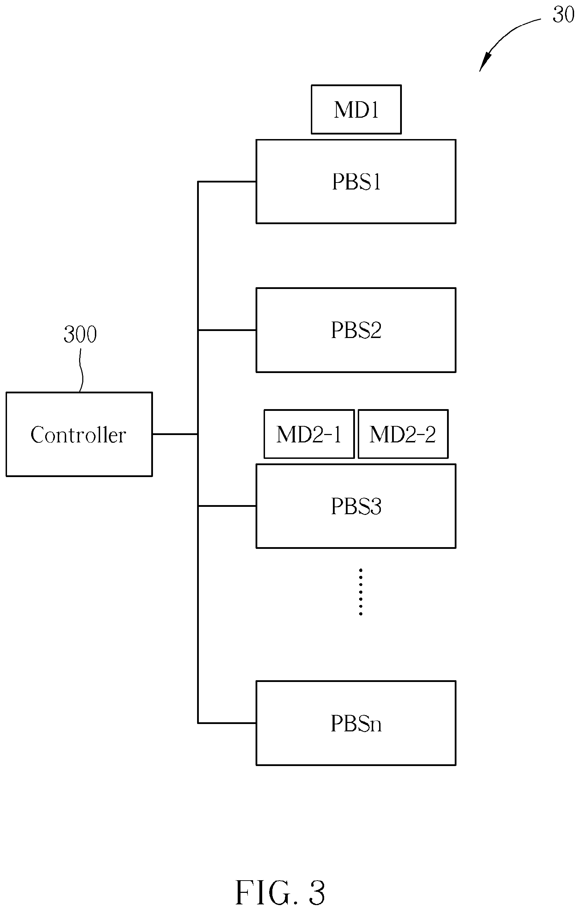

FIG. 3 illustrates a schematic diagram of a wireless charging system 30 in accordance with an example of the present invention. The wireless system 30 include mobile devices MD1, MD2-1, MD2-2, power base stations PBS1-PBSn, and a controller 300 connected to each of the power base stations. The power base stations PBS1-PBSn may be deployed in areas such as coffee shops, stores, train stations, airports, and restaurants for public use. The controller 300 may be a computer or a server at a control center or a front desk of the public area that monitors the usage or performs necessary computation for the power base stations PBS1-PBSn. In addition, if the user of a certain power base station encounters any problem, signals or messages relating to the power base station may be sent to the controller 300 so that people in the control center or the front desk can provide timely assistance. Note that a wireless charging device may be able to charge more than one electronic devices at the same time, as the example of the power base station PBS3 charging the mobile devices MD2-1 and MD2-2 shown in FIG. 3. Therefore, signals or the messages sent to the controller 300 may include necessary information (e.g. an identity of the mobile device) to distinguish the mobile devices MD2-1 and MD2-2 if only one of them encounters problem during wireless charging.

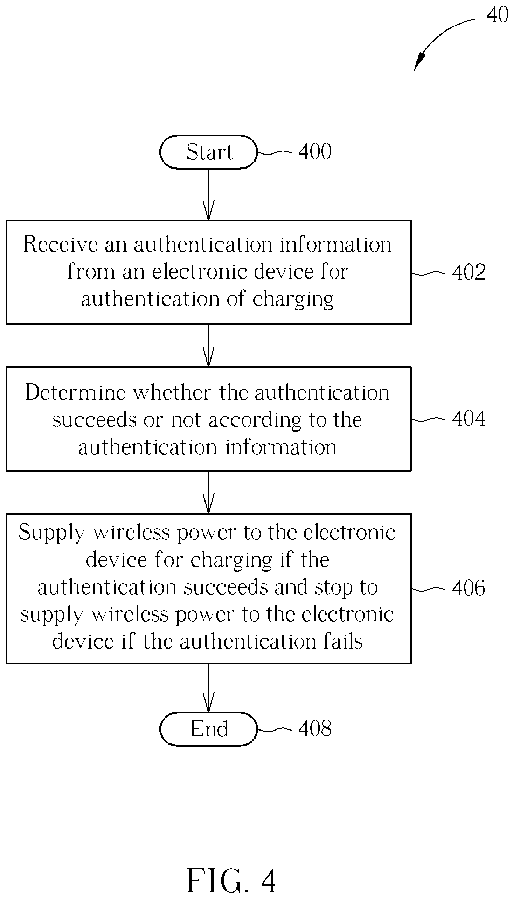

Please refer to FIG. 4, which is a flowchart of a process 40 according to an example of the present invention. The process 40 may be utilized for a wireless charging device, such as the wireless charging device 120 shown in FIG. 1, to realize wireless charging authentication in a wireless charging system. The wireless charging device is able to detect its proximity and know whether an electronic device with a power receiver comes close to the wireless charging device. After the wireless charging device detects the electronic device, it starts the process 40, which includes the following steps:
Step 400: Start.
Step 402: Receive an authentication information from an electronic device for authentication of charging.
Step 404: Determine whether the authentication succeeds or not according to the authentication information.
Step 406: Supply wireless power to the electronic device for charging if the authentication succeeds or stop to supply wireless power to the electronic device if the authentication fails.
Step 408: End.

According to the process 40, the wireless charging device is configured to receive the authentication information from the electronic device, and determine whether the electronic device is authorized for receiving wireless power according to the received authentication information. The authentication information may be included in a message sent by the electronic device via an in-band communication channel or an out-of-band communication channel. In the case of using out-of-band communication channel, the wireless charging device may start supplying wireless power if the authentication succeeds. If the authentication fails, the wireless charging device may avoid supplying wireless power or release a warning signal. In the case of using in-band communication channel, the wireless charging device has already supplied wireless power before receiving the authentication information. In such a condition, the wireless charging device keeps on supplying wireless power if the authentication succeeds. If the authentication fails, the wireless charging device may stop supplying wireless power or release a warning signal. In this manner, the service of wireless charging is under control.

Note that the process 40 is an example of the present invention. Those skilled in the art should readily make combinations, modifications and/or alterations on the abovementioned description and examples. For example, the wireless charging device may have a configuration for enabling or disabling the wireless charging authentication function. Thus, the owner of the wireless charging device can configure whether to execute the process 40 or not.

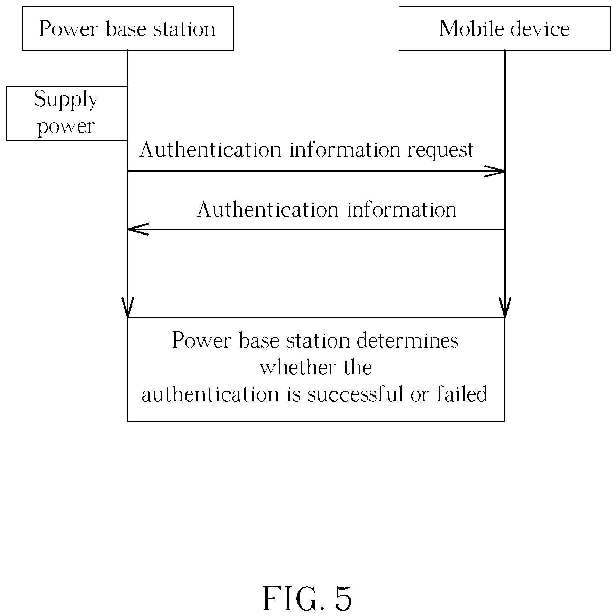

In an example, the wireless charging device may send an authentication information request to the electronic device, and receive the authentication information from the electronic device. The authentication information request may be included in a message sent from the wireless charging device to the electronic device. When the electronic device receives the authentication information request, it may send the authentication information to the wireless charging device in response or send a notice (may be included in a message) to inform that the electronic device does not intend to receive wireless power from the wireless charging device. This example is applicable to a wireless charging system where there is a communication channel from the wireless charging device to the electronic device. The signal diagram of this example is shown in FIG. 5.

The above describes the example where the wireless charging authentication procedure is initiated by the wireless charging device. In some cases, the wireless charging authentication procedure (or the communication) may be initiated by the electronic device. The electronic device may send a query message to the wireless charging device to explicitly ask whether the authentication is needed. In response, the wireless charging device may send a first response to the electronic device to indicate whether the authentication is needed or not. If the electronic device receives the first response indicating that the authentication is needed, the electronic device sends the authentication information to the wireless charging device in a message, and the system proceeds to the Step 402.

Alternatively, the electronic device may send a default authentication information to the wireless charging device to initiate the wireless charging authentication procedure. This example is regarded as an implicit query about whether the authentication is needed. The default authentication information may be any code such as a series of zero bits, numbers (e.g. 1234), or any identity (ID) of the electronic device. If the electronic device receives a negative-acknowledgement (NACK) from the wireless charging device, it understands that the authentication is needed, and then the system proceeds to the wireless charging authentication procedure.

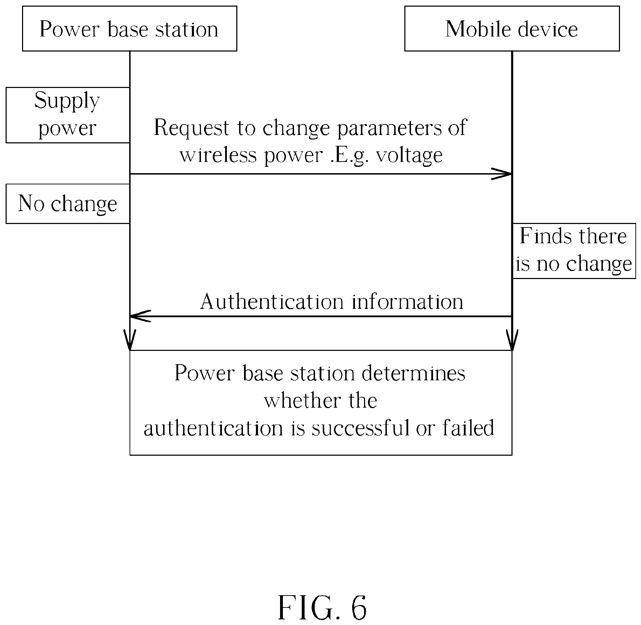

In some examples, the wireless charging system does not support a communication channel from the wireless charging device to electronic device. In order to know whether the wireless charging authentication is required, the electronic device may send a message or a packet (e.g. a control error packet or reconfiguration packet) to request the wireless charging device to
adjust/increase/decrease/reconfigure a parameter (e.g. voltage, current, amplitude, duty cycle, frequency, or power in watt) of the wireless power and then detect if there is any change in the wireless power. If the electronic device does not detect that the parameter changes over a threshold, the electronic device determines that wireless charging authentication is needed and sends the authentication information to the wireless charging device. The signal diagram of this example is shown in FIG. 6.

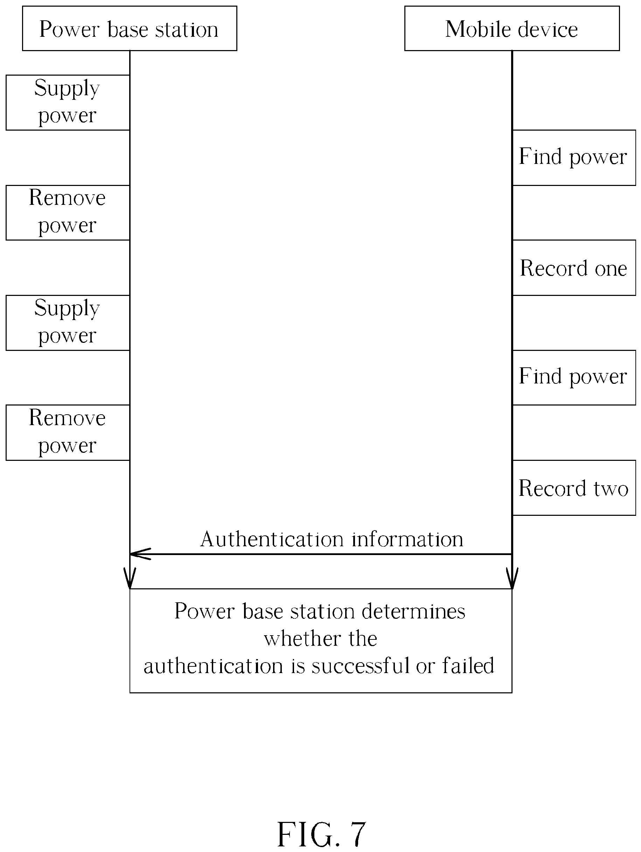

Alternatively, the electronic device may record the number of times that the wireless charging device removes or restarts wireless power within certain duration. If the electronic device detects that the wireless power is on and off for more than a predefined number of times within a certain duration, the electronic device knows that the authentication is required and may send the authentication information to the wireless charging device, or send a notice (may be included in a message) to inform that the electronic device does not intend to receive wireless power from the wireless charging device. This example is also applicable for the case when the wireless charging system does not support a communication channel from the wireless charging device to electronic device. The signal diagram of this example is shown in FIG. 7. The examples regarding Fig. 6 and Fig. 7 may be combined together for indicating to the electronic device that the authentication is needed.

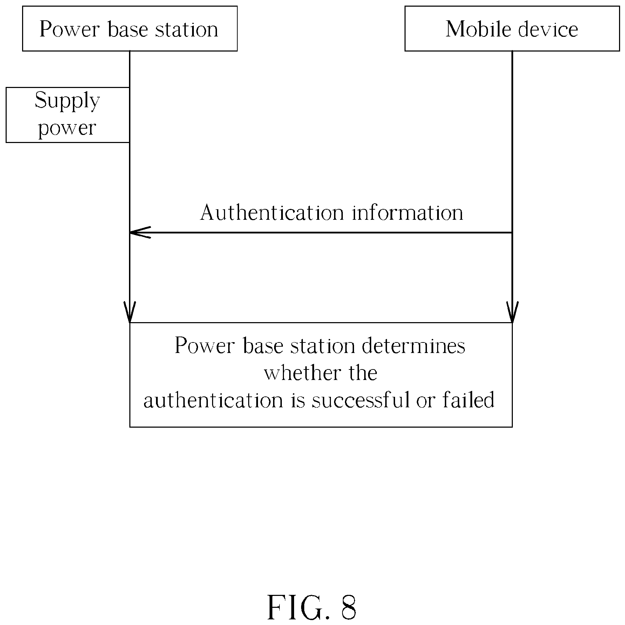

In an example, the electronic device may send the authentication information upon starting to receive wireless power or send the notice to inform that it does not intend to receive wireless power from the wireless charging device, regardless of whether the communication channel from the wireless charging device to electronic device is supported or not. So this example is applicable for both cases when the wireless charging system supports a communication channel from the wireless charging device to electronic device(i.e. the system supports bidirectional communication between the wireless charging device and the electronic device) and when the wireless charging system does not support a communication channel from the wireless charging device to the electronic device. The signal diagram of this example is shown in FIG. 8.

The authentication information may comprise a security code, a password, full or partial of an identity of the electronic device, an input to the electronic device, and information indicating that a user of the electronic device has completed a certain operation on the electronic device (e.g. the user had clicked an advertisement link). The security code and the password may be represented by a series of bits, any possible input to the electronic such as a plot and a series of numbers, or an image (e.g. user's face or fingerprint) recognized by the electronic device. The identity of the electronic device may be a unique ID of the power receiver (e.g., the power receiver 210) equipped in the electronic device. This identity may be determined by the manufacturer of the power receiver, such as the device ID which includes Manufacture Code and (Basic/Extended) Device Identifier. Alternatively, the identity of the electronic device may be represented by other modules in the electronic device. In an example, it may be the International Mobile Subscriber Identity (IMSI) or the Radio Network Temporary Identifier (RNTI) from cellular modules in the electronic device. In another example, it may be the Near Field Communication (NFC) or Bluetooth low energy (BLE) ID from NFC or Bluetooth modules in the electronic device. The identity of the electronic device which is represented by the identity of modules other than the receiver module may be encoded (e.g. scrambled, truncated) before sending to the wireless charging device as the authentication information.

A timer may be set in the wireless charging device at the beginning of the wireless charging procedure for waiting the authentication information. If the wireless charging device receives the authentication information within a predefined duration, it checks whether the authentication succeeds or fails. On the other hand, if the wireless charging device does not receive the authentication information within the predefined duration, the wireless charging device may determine that the authentication failed.

The wireless charging device may determine whether the authentication succeeds or not by comparing the received authentication information with data stored in a memory of the wireless charging device. In other words, the wireless charging device compares the received authentication information (e.g. a password) with the authentication information data (e.g. a referenced password) stored in its memory. If it matches, the authentication is successful. If it does not match, the authentication failed.

In another aspect, the wireless charging device may determine whether the authentication succeeds or not by manipulating the received authentication information and checking if a value derived from manipulation of the received authentication information equals a predefined value. In a case when the authentication information is a number, for example, the wireless charging device may take modulo operation on the number by a predetermined number. If the remainder matches a specific number, the authentication is successful; otherwise, the authentication failed.

The above descriptions illustrate examples where the wireless charging device verifies the authentication information locally. In some cases, the wireless charging device may be managed by a remote device so that the authentication information may be processed in the remote device instead. In such a situation, the wireless charging device may send the received authentication information to a controller (e.g., the controller 300 as shown in FIG. 3) of the wireless charging system for determining the authentication succeeds or not by the controller. The controller may perform manipulation on the authentication information and compare to check if the derived value equals the predefined value. Then, the controller sends the comparison result back to the wireless charging device.

If the authentication succeeds, the wireless charging device may send an authentication success message to the controller to inform that the authentication of the electronic device succeeds. The authentication success message may comprise at least one of the following: an identity of the electronic device, an identity of the wireless charging device, and a location of the wireless charging device or the electronic device.

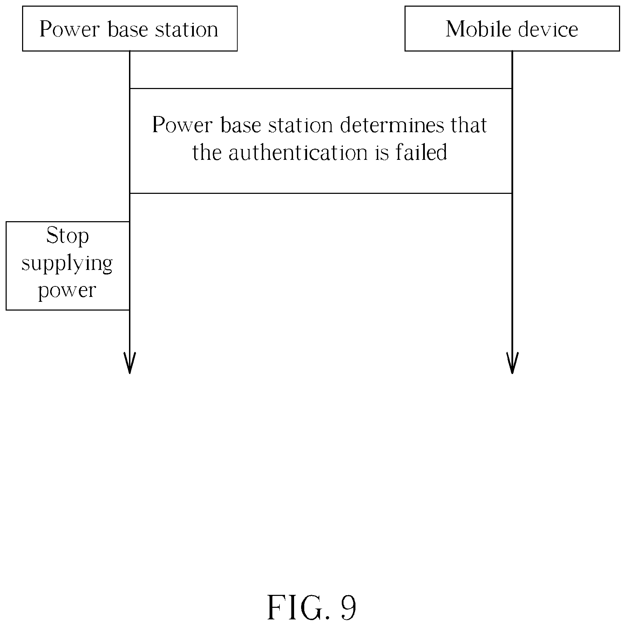

If the authentication fails, the wireless charging device may stop supplying power, as shown in the signal diagram of FIG. 9. In an example, the wireless charging device may request the authentication information from the electronic device again after it determines the authentication fails.

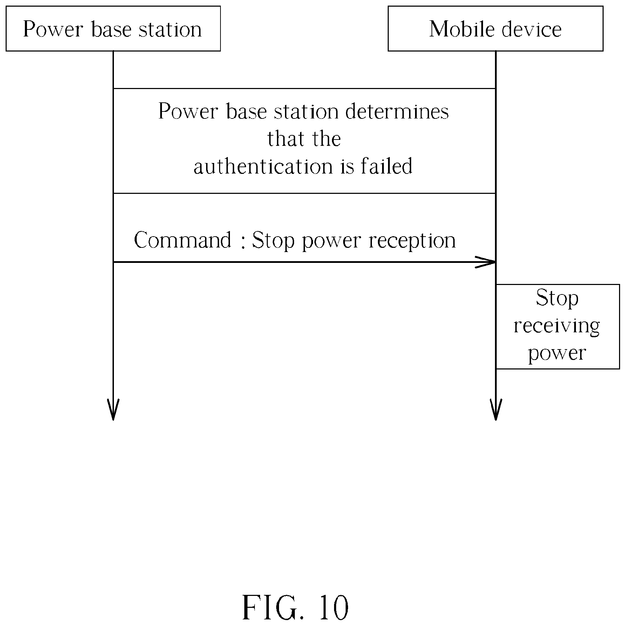

Referring to the example shown in FIG. 10, if the authentication fails, the wireless charging device may send a first command (e.g. a stop power reception command) to the electronic device which requests the electronic device to stop receiving wireless power from the wireless charging device. When the electronic device receives the first command, it should stop receiving wireless power. If the electronic device does not need charging (e.g. the battery is full), it may send a notice (which may be included in a message) to inform that the electronic device does not intend to receive wireless power from the wireless charging device.

Moreover, the wireless charging device may send a second command to the electronic device which requests the electronic device to resend the authentication information when the authentication fails or when the wireless charging device is supplying wireless power. When the electronic device receives the second command, it may resend the authentication information to the wireless charging device or send a notice (which may be included in a message) to inform that the electronic device does not intend to receive wireless power from the wireless charging device.

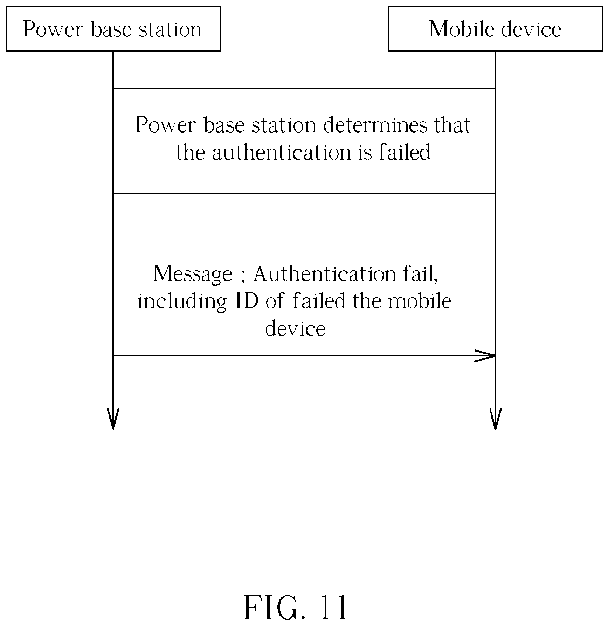

Referring to the example shown in FIG. 11, the wireless charging device may send an authentication failure message to a controller (e.g. controller 300) if the authentication fails. The authentication failure message informs the controller that the authentication for the electronic device fails. The authentication failure message may comprise at least one of the following: an identity of the electronic device, an identity of the wireless charging device, a location of the wireless charging device or the electronic device, and the reason of authentication failure. Thus, people who monitor the controller can diagnose the failure issue based on the authentication failure message and provide assistance if needed.

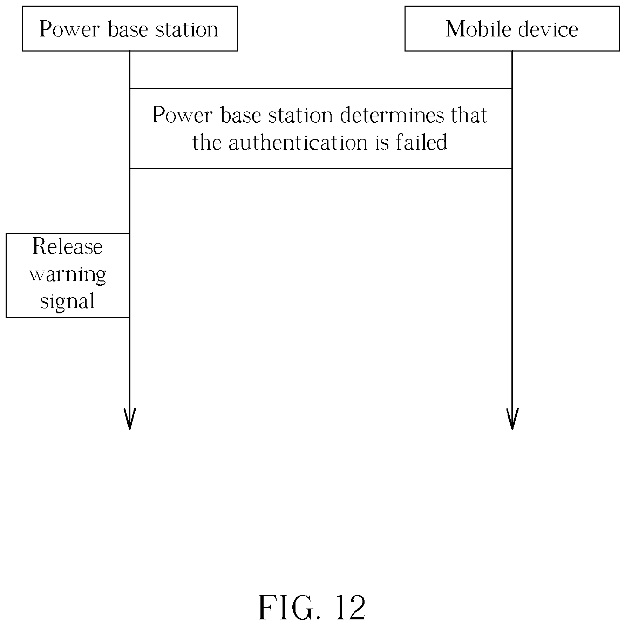

Referring to the example shown in FIG. 12, when the authentication fails, the wireless charging device may release a warning signal, which can bring immediate attentions of the surrounding people. The warning signal may be in any forms such as voice, speech, audio, image, and/or video.

To make sure that the electronic device is not replaced by other device during wireless charging, the wireless charging device may send a third command to the electronic device to request authentication information again. When the electronic device receives the third command, it sends authentication information to the wireless charging device. Alternatively, the electronic device may spontaneously send the authentication information to the wireless charging device from time to time during wireless charging so that the wireless charging device may receive the authentication information from the electronic device periodically.

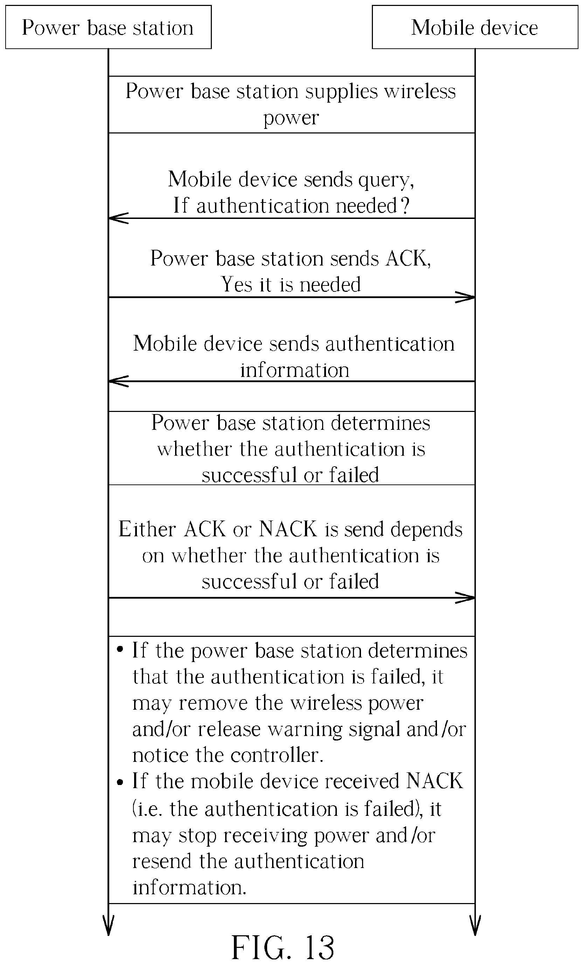

Referring to the example shown in FIG. 13, the wireless charging device may send a second response to the electronic device to indicate whether the authentication succeeds or fails after determining the authentication result. The second response may be in a form of acknowledgement (ACK)/negative-acknowledgement (NACK). If the electronic device receives a NACK, it may display an error message on the screen of the electronic device so that the user can know what happened.

If the wireless charging authentication procedure completes and the authentication fails, the wireless charging system may restart the protocol cycle from the beginning. For example, in a wireless charging system conforming to the WPC specification, the wireless charging system may rewind to the selection phase to start over the protocol cycle. Alternatively, the wireless charging system may go back to one of the previous protocol phases (e.g. ping phase, identification and configuration phase, or negotiation phase).

The abovementioned steps of the process 40 including suggested steps may be realized by means of hardware, software, firmware, or an electronic system. Examples of hardware may include analog, digital and mixed circuits known as microcircuit, microchip, or silicon chip. Examples of the electronic system may include a system on chip (SOC), system in package (SiP), and a computer on module (COM).

To sum up, the present invention provides a method and related wireless charging device and wireless charging system for wireless charging authentication. The present invention may be applied to wireless power systems which requires payment for wireless charging, or wireless power systems which provides free charging service. In some situations, the wireless charging authentication may be enabled in order to block unauthorized charging. The type of service (e.g., free or not free) which the wireless charging system provides may depend on the configurations of the wireless charging systems. Since the present invention can be applied to wireless power systems which provides free charging services, the wireless charging device is backward compatible, and is also suitable for private use.

## Claims

1. A method of wireless charging authentication for a wireless charging device (120, 220), comprising:
supplying wireless power to an electronic device (100, 200) for charging;
periodically receiving (402) an authentication information sent from the electronic device (100, 200) for authentication of charging;
determining (404) whether the authentication succeeds or not according to the authentication information; and stopping (406) to supply wireless power to the electronic device (100, 200) if the authentication fails.

2. The method of claim 1, further comprising:
sending a first response to the electronic device (100, 200) to indicate whether the authentication is needed in response to a query received from the electronic device (100, 200).

3. The method of claim 1, wherein the step of determining whether the authentication succeeds or not according to the authentication information comprises:
determining that the authentication fails if the wireless charging device (120, 220) does not receive the authentication information within a predefined duration.

4. The method of claim 1, further comprising:
sending a second response to the electronic device (100, 200) to indicate whether the authentication succeeds or fails.

5. The method of claim 1, wherein the wireless charging device (120, 220) keeps on supplying wireless power if the authentication succeeds.

6. The method of claim 1, wherein the authentication information comprises at least one of a security code, a password, full or partial of an identity of the electronic device (100, 200), an input to the electronic device (100, 200), and information indicating that a user of the electronic device (100, 200) has completed a certain operation on the electronic device (100, 200) .

7. The method of claim 1, wherein the wireless charging device (120, 220) determines whether the authentication succeeds or not by comparing the received authentication information with data stored in a memory of the wireless charging device (120, 220).

8. The method of claim 1, wherein the wireless charging device (120, 220) determines whether the authentication succeeds or not by manipulating the received authentication information and checking if a value derived from manipulation of the received authentication information equals a predefined value.

9. The method of claim 1, wherein the step of determining whether the authentication succeeds or not according to the authentication information comprises:
sending the received authentication information to a controller (300) for determining the authentication succeeds or not by the controller (300).

10. The method of claim 1, further comprising:
sending an authentication failure message to a controller (300) to inform that the authentication for the electronic device (100, 200) fails;
wherein the authentication failure message comprises at least one of an identity of the electronic device (100, 200), an identity of the wireless charging device (120, 220), a location of the wireless charging device (120, 220) or the electronic device (100, 200), and the reason of authentication failure.

11. The method of claim 1, further comprising:
sending a request to the electronic device (100, 200) for receiving the authentication information from the electronic device (100, 200).

12. A wireless charging system (20), comprising:
an electronic device (100, 200); and
a wireless charging device (120, 220), for providing wireless power to charge at least one electronic device comprising the electronic device (100, 200);
wherein the wireless charging device (120, 220) is configured to perform the method of any of claims 1-11.

## Patentansprüche

1. Verfahren zur drahtlosen Ladeauthentifizierung für eine Drahtlosladevorrichtung (120, 220), das Folgendes aufweist:
Liefern von drahtloser Leistung an eine elektronische Vorrichtung (100, 200) zum Laden;
periodisches Empfangen (402) einer Authentifizierungsinformation, die von der elektronischen Vorrichtung (100, 200) zur Authentifizierung des Ladens gesendet wird;
Bestimmen (404), ob die Authentifizierung gemäß der Authentifizierungsinformation erfolgreich ist oder nicht; und
Anhalten (406) des Lieferns von drahtloser Leistung an die elektronische Vorrichtung (100, 200), wenn die Authentifizierung fehlschlägt.

2. Verfahren gemäß Anspruch 1, das ferner Folgendes aufweist:
Senden einer ersten Antwort an die elektronische Vorrichtung (100, 200), um anzuzeigen, ob die Authentifizierung erforderlich ist, und zwar ansprechend auf eine Abfrage, die von der elektronischen Vorrichtung (100, 200) empfangen wird.

3. Verfahren gemäß Anspruch 1, wobei der Schritt des Bestimmens ob die Authentifizierung gemäß der Authentifizierungsinformation erfolgreich ist oder nicht, Folgendes aufweist:
Bestimmen, dass die Authentifizierung fehlgeschlagen ist, wenn die Drahtlosladevorrichtung (120, 220) die Authentifizierungsinformation nicht innerhalb einer vordefinierten Periode empfängt.

4. Verfahren gemäß Anspruch 1, das ferner Folgendes aufweist:
Senden einer zweiten Antwort an die elektronische Vorrichtung (100, 200), um anzuzeigen ob die Authentifizierung erfolgreich war oder fehlgeschlagen ist.

5. Verfahren gemäß Anspruch 1, wobei die Drahtlosladevorrichtung (120, 220) das Liefern von drahtloser Leistung fortsetzt, wenn die Authentifizierung erfolgreich war.

6. Verfahren gemäß Anspruch 1, wobei die Authentifizierungsinformation einen Sicherheitscode und/oder ein Passwort und/oder eine vollständige oder partielle Identität der elektronischen Vorrichtung (100, 200) und/oder eine Eingabe der elektronischen Vorrichtung (100, 200) und/oder Information aufweist, die anzeigt, dass ein Nutzer der elektronischen Vorrichtung (100, 200) einen bestimmten Vorgang auf der elektronischen Vorrichtung (100, 200) abgeschlossen hat.

7. Verfahren gemäß Anspruch 1, wobei die Drahtlosladevorrichtung (120, 220) bestimmt, ob die Authentifizierung erfolgreich war oder nicht, und zwar durch Vergleichen der empfangenen Authentifizierungsinformation mit Daten, die in einem Speicher der Drahtlosladevorrichtung (120, 220) gespeichert ist.

8. Verfahren gemäß Anspruch 1, wobei die Drahtlosladevorrichtung (120, 220) bestimmt, ob die Authentifizierung erfolgreich war oder nicht, und zwar durch Verarbeiten der empfangenen Authentifizierungsinformation und Überprüfen, ob ein Wert, der aus der Verarbeitung der empfangenen Authentifizierungsinformation abgeleitet wird, einem vordefinierten Wert entspricht.

9. Verfahren gemäß Anspruch 1, wobei der Schritt des Bestimmens, ob die Authentifizierung gemäß der Authentifizierungsinformation erfolgreich war oder nicht, Folgendes aufweist:
Senden der empfangenen Authentifizierungsinformation an eine Steuervorrichtung (300), um durch die Steuervorrichtung (300) zu bestimmen, ob die Authentifizierung erfolgreich war oder nicht.

10. Verfahren gemäß Anspruch 1, das ferner Folgendes aufweist:
Senden einer Authentifizierungsfehlernachricht an eine Steuervorrichtung (300), um darüber zu informieren, dass die Authentifizierung für die elektronische Vorrichtung (100, 200) fehlgeschlagen ist;
wobei die Authentifizierungsfehlernachricht eine Identität der elektronischen Vorrichtung (100, 200) und/oder eine Identität der Drahtlosladevorrichtung (120, 220) und/oder eine Position der Drahtlosladevorrichtung (120, 220) und/oder der elektronischen Vorrichtung (100, 200) und/oder den Grund für den Authentifizierungsfehler aufweist.

11. Verfahren gemäß Anspruch 1, das ferner Folgendes aufweist:
Senden einer Anfrage an die elektronische Vorrichtung (100, 200) zum Empfangen der Authentifizierungsinformation von der elektronischen Vorrichtung (100, 200).

12. Drahtlosladesystem (20), das Folgendes aufweist:
eine elektronische Vorrichtung (100, 200); und
eine Drahtlosladevorrichtung (120, 220) zum Liefern von drahtloser Leistung, um zumindest eine elektronische Vorrichtung, die die elektronische Vorrichtung (100, 200) aufweist, zu laden;
wobei die Drahtlosladevorrichtung (120, 220) konfiguriert ist, um das Verfahren gemäß einem der Ansprüche 1 - 11 auszuführen.

## Revendications

1. Procédé d'authentification de charge sans fil pour un dispositif de charge sans fil (120, 220), comprenant :
fournir de l'énergie sans fil à un dispositif électronique (100, 200) pour une charge ;
recevoir périodiquement (402) une information d'authentification envoyée à partir du dispositif électronique (100, 200) pour une authentification de charge ;
déterminer (404) si l'authentification réussit ou non conformément à l'information d'authentification ; et
arrêter (406) de fournir de l'énergie sans fil au dispositif électronique (100, 200) si l'authentification échoue.

2. Procédé selon la revendication 1, comprenant en outre :
envoyer une première réponse au dispositif électronique (100, 200) pour indiquer si l'authentification est nécessaire en réponse à une interrogation reçue du dispositif électronique (100, 200).

3. Procédé selon la revendication 1, dans lequel l'étape consistant à déterminer si l'authentification réussit ou non conformément à l'information d'authentification comprend :
déterminer que l'authentification échoue si le dispositif de charge sans fil (120, 220) ne reçoit pas l'information d'authentification dans une durée prédéfinie.

4. Procédé selon la revendication 1, comprenant en outre :
envoyer une deuxième réponse au dispositif électronique (100, 200) pour indiquer si l'authentification réussit ou échoue.

5. Procédé selon la revendication 1, dans lequel le dispositif de charge sans fil (120, 220) continue de fournir de l'énergie sans fil si l'authentification réussit.

6. Procédé selon la revendication 1, dans lequel l'information d'authentification comprend au moins l'un d'un code de sécurité, d'un mot de passe, d'une identité complète ou partielle du dispositif électronique (100, 200), d'une information introduite dans le dispositif électronique (100, 200), et d'une information indiquant qu'un utilisateur du dispositif électronique (100, 200) a achevé une certaine opération sur le dispositif électronique (100, 200).

7. Procédé selon la revendication 1, dans lequel le dispositif de charge sans fil (120, 220) détermine si l'authentification réussit ou non en comparant l'information d'authentification reçue à des données mémorisées dans une mémoire du dispositif de charge sans fil (120, 220).

8. Procédé selon la revendication 1, dans lequel le dispositif de charge sans fil (120, 220) détermine si l'authentification réussit ou non en manipulant l'information d'authentification reçue et en vérifiant si une valeur déduite de la manipulation de l'information d'authentification reçue est égale à une valeur prédéfinie.

9. Procédé selon la revendication 1, dans lequel l'étape consistant à déterminer si l'authentification réussit ou non conformément à l'information d'authentification comprend :
envoyer l'information d'authentification reçue à un contrôleur (300) pour déterminer si l'authentification réussit ou non par le contrôleur (300).

10. Procédé selon la revendication 1, comprenant en outre :
envoyer un message d'échec d'authentification à un contrôleur (300) pour informer que l'authentification pour le dispositif électronique (100, 200) échoue ;
dans lequel le message d'échec authentification comprend au moins l'une d'une identité du dispositif électronique (100, 200), d'une identité du dispositif de charge sans fil (120, 220), d'une position du dispositif de charge sans fil (120, 220) ou du dispositif électronique (100, 200), et de la raison de l'échec de l'authentification.

11. Procédé selon la revendication 1, comprenant en outre :
envoyer une requête au dispositif électronique (100, 200) pour recevoir l'information d'authentification à partir du dispositif électronique (100, 200).

12. Système de charge sans fil (20) comprenant :
un dispositif électronique (100, 200) ; et
un dispositif de charge sans fil (120, 220), pour fournir de l'énergie sans fil pour charger au moins un dispositif électronique comprenant le dispositif électronique (100, 200) ;
dans lequel le dispositif de charge sans fil (120, 220) est agencé pour réaliser le procédé de l'une quelconque des revendications 1 à 11.
